# EUROPÄISCHE PATENTSCHRIFT

(11) **EP 4 015 162 B1**
(45) Veröffentlichungstag und Bekanntmachung des Hinweises auf die Patenterteilung: **11.09.2024**
(21) Anmeldenummer: 21202126.5
(22) Anmeldetag: 12.10.2021
(51) Int. Cl.: B25J 13/08

(54) **VERFAHREN ZUR FUNKTIONSOPTIMIERUNG EINES ROBOTERARMS**
METHOD FOR OPTIMISING THE FUNCTION OF A ROBOT ARM
PROCÉDÉ D'OPTIMISATION FONCTIONNELLE D'UN BRAS ROBOTIQUE

(30) Priorität: 18.12.2020 DE 102020134260
(43) Veröffentlichungstag der Anmeldung: 22.06.2022
(73) Patentinhaber: Deutsches Zentrum für Luft- und Raumfahrt e.V., 53227 Bonn (DE)
(72) Erfinder: Iskandar, Maged, 82205 Gilching (DE); Dietrich, Alexander, 85716 Unterschleißheim, (DE); Eiberger, Oliver, 80634 München (DE)
(74) Vertreter: dompatent von Kreisler Selting Werner - Partnerschaft von Patent- und Rechtsanwälten mbB

(56) Entgegenhaltungen:
- DE-B3- 102017 125 330
- US-A1- 2018 361 594
- US-A1- 2019 015 972

## Beschreibung

Die Erfindung betrifft ein Verfahren zur Funktionsoptimierung eines Roboterarms. Aus dem Stand der Technik ist es bekannt, mit einem Roboterarm dadurch zu interagieren, dass ein Bediener eine Kraft und/oder ein Drehmoment auf eine bestimmte Stelle der Oberfläche des Roboterarms aufbringt. Die Größe der aufgebrachten Kraft und ihre exakte Position auf der Oberfläche des Roboterarms können detektiert werden, woraufhin hieraus verschiedene Eingabebefehle abgeleitet werden können.

Ein solches Verfahren ist auch bekannt aus der nicht veröffentlichten Patentanmeldung derselben Anmelderin DE 10 2020 102 160.

Das Dokument US 2019/015972 A1 ist ein weiterer relevanter Stand der Technik.

Aus dem Stand der Technik ist es weiterhin bekannt, Kontaktkräfte, die auf die Roboterstruktur einwirken, unter Verwendung von taktilen Sensoren zu detektieren. Dies ist bekannt aus:
Dahiya, R.S., Mittendorfer, P., Valle, M., Cheng, G. and Lumelsky, V.J., 2013. Directions toward effective utilization of tactile skin: A review. IEEE Sensors Journal, 13(11), pp.4121-4138.
Cannata, G., Maggiali, M., Metta, G. and Sandini, G., 2008, August. An embedded artificial skin for humanoid robots. In 2008 IEEE International conference on multisensor fusion and integration for intelligent systems (pp. 434-438). IEEE.

Die Verwendung von propriozeptiven Sensoren und Machine Learning Algorithmen in diesem Zusammenhang ist bekannt aus den folgenden Veröffentlichungen:
Buondonno, G. and De Luca, A., 2016, October. Combining real and virtual sensors for measuring interaction forces and moments acting on a robot. In 2016 IEEE/RSJ International Conference on Intelligent Robots and Systems (IROS) (pp. 794-800). IEEE.
Zwiener, A., Geckeler, C. and Zell, A., 2018, May. Contact Point Localization for Articulated Manipulators with Proprioceptive Sensors and Machine Learning. In 2018 IEEE International Conference on Robotics and Automation (ICRA) (pp. 323-329). IEEE.
Manuelli, L. and Tedrake, R., 2016, October. Localizing external contact using proprioceptive sensors: The contact particle filter. In 2016 IEEE/RSJ International Conference on Intelligent Robots and Systems (IROS) (pp. 5062-5069). IEEE.

Die Anwendung dieser Methoden ist sehr eingeschränkt, weil sie eine erhebliche Verzögerung durch die Zeit aufweisen, die für die Ausführung des Algorithmus notwendig ist. Weiterhin weisen sie eine geringe Genauigkeit bei der Schätzung der Kontaktposition auf der Oberfläche des Roboterarms auf. Weiterhin sind derzeitige Algorithmen beschränkt auf die Schätzung lediglich eines Kontaktpunktes, was die Anwendung einschränkt, wenn der Roboterarm gerade mit einem weiteren Objekt interagiert.

Aufgabe der Erfindung ist es, ein Verfahren bereitzustellen, mit dem die Funktion eines Roboterarms optimiert werden kann, indem das Eingeben von Befehlen durch Drücken von vordefinierten Eingabepunkten und/oder Eingabeflächen auf der Oberfläche des Roboterarms ermöglicht wird.

Die Lösung der Aufgabe erfolgt erfindungsgemäß durch die Merkmale des Anspruchs 1.

Das erfindungsgemäße Verfahren zur Funktionsoptimierung eines Roboterarms weist die folgenden Schritte auf:
Es wird ein Eingabepunkt und/oder eine Eingabefläche auf der Oberfläche des Roboterarms markiert. Eine solche Markierung kann insbesondere nachträglich vorgenommen werden, so dass sie beispielsweise auf einen bestehenden Roboterarm aufgebracht wird. Bei Drücken dieses Eingabepunktes bzw. der Eingabefläche durch einen Bediener erfolgt ein Erfassen einer Kraft und/oder eines Drehmoments in mindestens einem Gelenk des Roboterarms. Hieraus erfolgt ein Ableiten der Position des Berührungspunktes auf der Oberfläche des Roboterarms, so dass hierdurch ein Ableiten eines Befehls erfolgt, der durch das Drücken dieses Eingabepunktes und/oder der Eingabefläche ausgelöst werden soll. Der Eingabepunkt bzw. die Eingabefläche dient somit als virtueller Knopf.

Durch das erfindungsgemäße Markieren des Eingabepunktes bzw. der Eingabefläche ist es für einen Bediener sehr einfach möglich, zu erkennen, an welcher Stelle er mit dem Roboterarm interagieren muss, um einen bestimmten Befehl zu erzeugen. Beispielsweise könnte die Markierung Hinweise auf die Art des zu erzeugenden Eingabebefehls aufweisen, so dass der Bediener im Vorhinein erkennen kann, welche Auswirkung es haben wird, wenn er den Roboterarm an dieser Stelle berührt. Hierdurch wird ein besonders intuitives Bedienen des Roboterarms ermöglicht.

Unter einer Funktionsoptimierung des Roboterarms wird verstanden, dass dieser derart modifiziert wird, dass seine Funktionen erweitert werden.

Es ist bevorzugt, dass basierend auf der bekannten Geometrie des Roboterarms eine zweidimensionale Abbildung mindestens eines Teils der dreidimensionalen Oberfläche des Roboterarms erstellt wird. Hierbei wird auf dieser zweidimensionalen Abbildung mindestens ein Eingabepunkt und/oder mindestens einer Eingabefläche markiert, an dessen bzw. deren Stelle an der Oberfläche des ersten Roboterarms das Eingeben eines Befehls erfolgen soll.

In einem weiteren Schritt wird diese zweidimensionale Abbildung auf die Oberfläche des Roboterarms aufgebracht, insbesondere aufgeklebt. Dies kann beispielsweise anhand von definierten Referenzpunkten am Roboterarm erfolgen, so dass die zweidimensionale Abbildung passgenau auf die dreidimensionale Oberfläche des Roboterarms aufgebracht wird. Da die genaue Position auf der dreidimensionalen Oberfläche des Roboterarms bekannt ist (in dieser Ausführungsform muss sie vordefiniert sein), ist es möglich, diese Position exakt auf der zweidimensionalen Abbildung der Oberfläche des Roboterarms zu markieren. Hierbei wird die bekannte Geometrie des Roboterarms berücksichtigt.

In dieser Ausführungsform ist es weiterhin bevorzugt, dass die zweidimensionale Abbildung eines Teils der dreidimensionalen Oberfläche mindestens ein Gelenk des Roboterarms enthält.

Es ist weiterhin bevorzugt, dass das Markieren des Eingabepunktes bzw. der Eingabefläche durch Aufbringen eines Aufklebers auf die Oberfläche der Roboterhand erfolgt. Hierdurch ist auf einfache Weise möglich, bestehende Roboterarme nachzurüsten, so dass sie auf besonders intuitive Weise von einem Bediener bedient werden können.

Weiterhin ist es bevorzugt, dass das Markieren des Eingabepunktes bzw. der Eingabefläche durch Aufbringen eines Leuchtelements, insbesondere einer OLED-Folie auf die Oberfläche der Roboterhand erfolgt. Hierdurch ist es möglich, Eingabebefehle auch bei schlechten Lichtverhältnissen bzw. in der Dunkelheit zu erzeugen.

Es ist weiterhin bevorzugt, dass dem Eingabepunkt seine Funktion, d.h. der Befehl, der durch sein Drücken erzeugt werden soll, wie folgt zugewiesen wird:
- Drücken des Eingabepunktes am Roboterarm
   - - Auswählen der gewünschten Funktion des Eingabepunktes
- Zuordnen dieser ausgewählten Funktion zum Eingabepunkt

Hierdurch wird ein besonders einfaches Zuordnen der gewünschten Funktionen zu dem Eingabepunkt ermöglicht.

Es ist weiterhin bevorzugt, dass der Eingabepunkt und/oder die Eingabefläche als analoger Knopf dient, indem die Größe bzw. die Amplitude der auf ihm bzw. ihr aufgebrachten Kraft oder dem Drehmoment erfasst wird. Hierdurch kann der Funktionsumfang dieser Eingabemöglichkeit gegenüber einer einfachen binären Eingabe erweitert werden.

Weiterhin ist es bevorzugt, dass der Eingabefläche ihre Funktion, d.h. der Befehl, der durch ihr Drücken erzeugt werden soll, wie folgt zugewiesen wird:
- Abfahren der Umrisse der Eingabefläche auf der Oberfläche des Roboterarms
- Auswählen der gewünschten Funktion des Eingabepunktes
- Zuordnen dieser ausgewählten Funktion zum Eingabepunkt

Hierdurch ist es auf besonders einfache Weise möglich, eine Eingabefläche auf der Oberfläche des Roboterarms zu definieren. Diese kann insbesondere von einem Bediener frei gewählt werden und auch im laufenden Betrieb je nach den Bedürfnissen des Bedieners verändert werden. Nach Auswählen dieser Eingabefläche kann diese selbstverständlich am Roboterarm entsprechend markiert werden, so dass sie eindeutig vom Bediener identifiziert werden kann. Dies kann insbesondere auch vor Abfahren ihrer Umrisse erfolgen. Dieses Abfahren der Umrisse kann insbesondere durch einen Finger eines Bedieners erfolgen.

Die selben Merkmale und Vorteile gelten auch für das oben beschriebene Zuordnen einer Funktion zu einem Eingabepunkt.

In einer weiteren bevorzugten Ausführungsform wird beim Drücken eines Eingabepunktes und/oder einer Eingabefläche ein Funktionserweiterungselement am distalen Ende des Roboterarms anstelle eines Werkzeugs aufgenommen. Auf diesem sind mehrere Eingabepunkte bzw. Eingabeflächen markiert. Hierdurch kann der Funktionsumfang des Roboterarms erweitert werden. Durch Drücken eines dieser Eingabepunkte bzw. der Eingabeflächen kann sodann eine gewünschte Funktion ausgelöst werden. Die Position der Eingabepunkte bzw. die Umrisse der Eingabeflächen auf dem Funktionserweiterungselement sind im Vorhinein bekannt. Weiterhin ist die räumliche Zuordnung des Funktionserweiterungselements relativ zum Roboterarm bekannt, da dieses anstelle eines üblichen Werkzeugs in der Aufnahme am distalen Ende des Roboterarms aufgenommen werden kann.

Im Folgenden werden bevorzugte Ausführungsformen der Erfindung anhand von Figuren erläutert.

Es zeigen:
- Figur 1 und Figur 2:: Zweidimensionale Abbildungen der dreidimensionalen Oberfläche eines Roboterarms
- Figur 3a und Figur 3b:: eine Ausführungsform eines Funktionserweiterungselements
- Figur 4:: Eine Möglichkeit zur Definition von Eingabeflächen
- Figur 5:: Weitere Möglichkeiten zur Definition von Eingabeflächen
- Figur 6: einen Roboterarm mit einem Funktionserweiterungselement

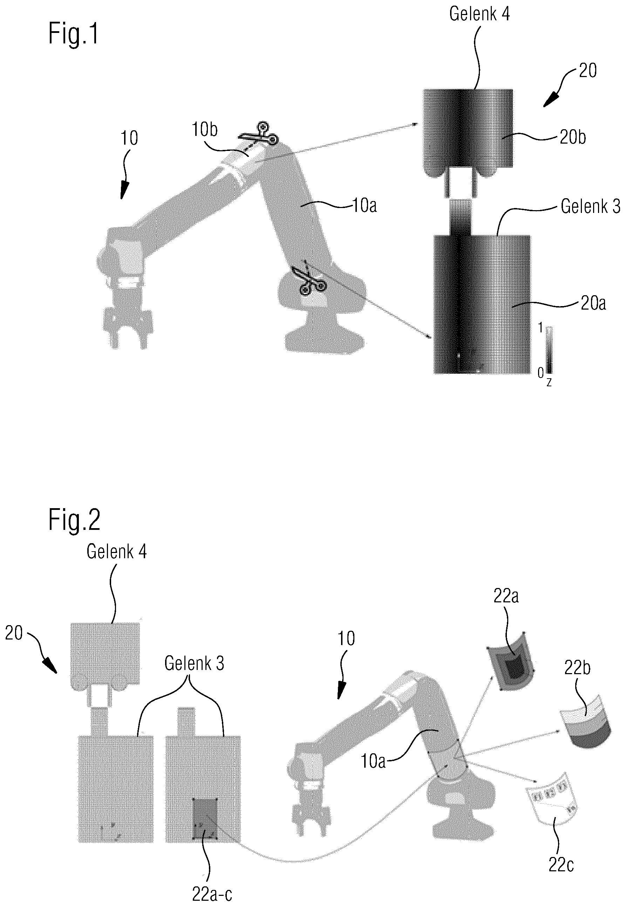

Figur 1 zeigt, auf welche Weise eine zweidimensionale Abbildung 20 der dreidimensionalen Oberfläche des Roboterarms 10 erstellt werden kann. Der Roboterarm 10 umfasst ein erstes Element 10a, das auf das erste Abbildungselement 20a abgebildet wird, sowie ein zweites Element 10b, das auf das zweite Abbildungselement 20b abgebildet wird. Diese beiden Elemente werden durch ein Gelenk miteinander verbunden, das sich ebenfalls in der Abbildung 20 wiederfindet.

Eine ähnliche Darstellung findet sich in Figur 2. Hier ist zusätzlich dargestellt, wie am unteren Ende des ersten Elements 10a des Roboterarms 10 eine Eingabefläche 22a, 22b, 22c angebracht werden kann. Diese wird zunächst in der in Figur 2 links dargestellten Abbildung 20 markiert (s. dortiges Bezugszeichen 22a - 22c). Sodann wird diese Eingabefläche vorzugsweise zusammen mit der restlichen Abbildung 20 auf die dreidimensionale Oberfläche des Roboterarms 10 aufgebracht, insbesondere geklebt. Hierbei können Markierungspunkte verwendet werden, um ein passgenaues Aufbringen der Abbildung bzw. des hieraus entstandenen Abbildungselements auf den Roboterarm zu erreichen.

Mit den Bezugszeichen 22a - 22c sind verschiedene Varianten von Anordnungen virtueller Knöpfe auf der Eingabefläche 22 dargestellt. Jeder dieser virtuellen Knöpfe kann eine unterschiedliche Funktion auslösen.

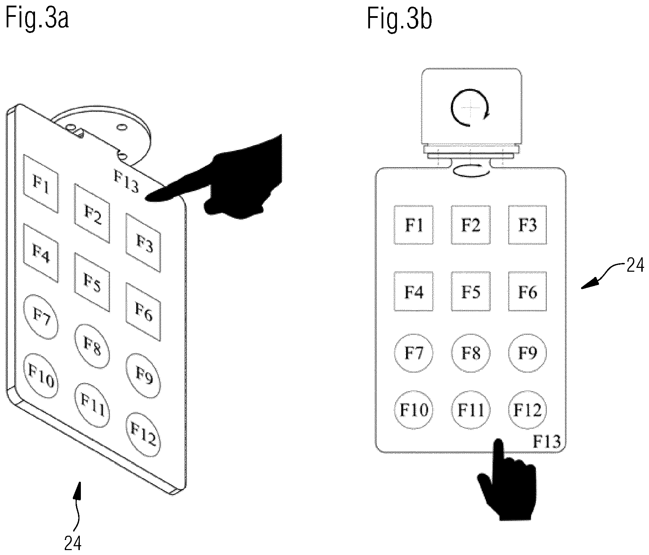

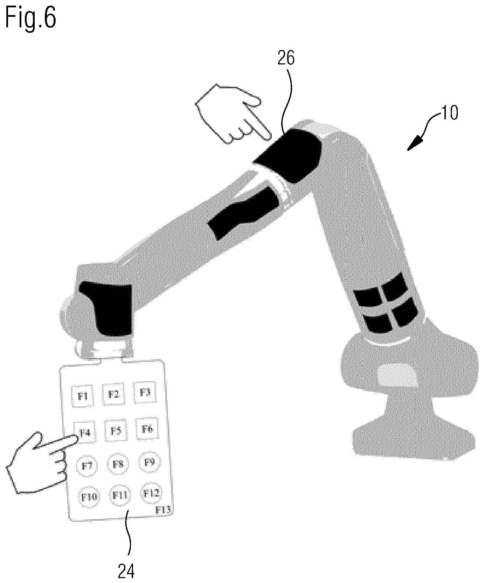

Figuren 3a und 3b zeigen eine Ausführungsform eines Funktionserweiterungselements 24. Dieses ist in Form einer Platte ausgebildet und weist mehrere Markierungen F1 - F12 auf. Wie in Figur 6 dargestellt, kann dieses Funktionserweiterungselement 24 vom Roboterarm 10 automatisch gegriffen werden. Dies kann beispielsweise dadurch erfolgen, dass ein Bediener die Eingabefläche 26 betätigt, so dass der Roboterarm an seinem distalen Ende das Funktionserweiterungselement 24 anstelle eines Werkzeugs aufnimmt. Sodann kann der Bediener die mehreren Eingabepunkte bzw. Eingabeflächen auf dem Funktionserweiterungselement betätigen, so dass der Funktionsumfang des Roboterarms erweitert werden kann. Die freie Fläche F13 kann hierbei einen weiteren virtuellen Knopf darstellen.

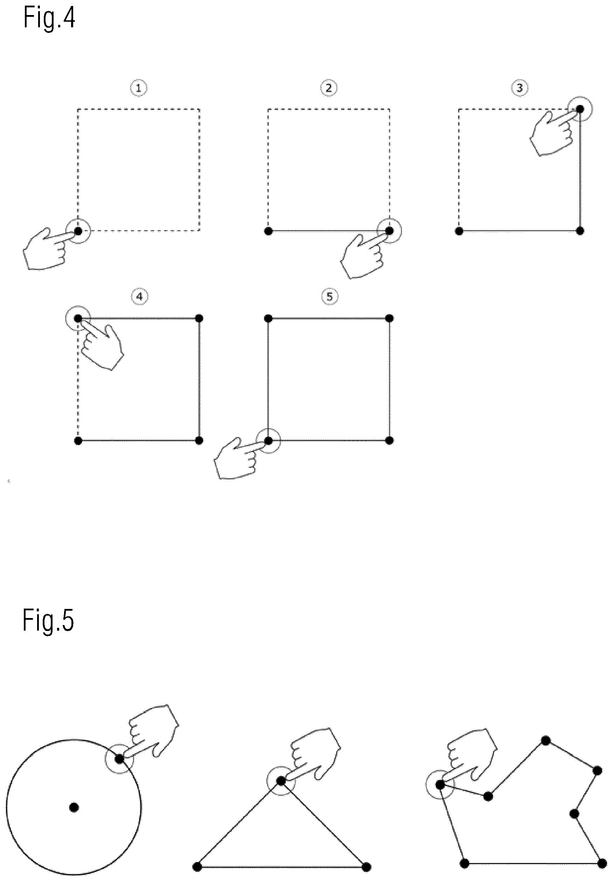

In den Figuren 4 und 5 ist dargestellt, wie ein Bediener eine Eingabefläche dadurch definieren kann, dass er ihre Umrisse auf der Oberfläche des Roboterarms z.B. mit dem Finger abfährt. Dieser Prozess kann an jedem Teil der Roboterstruktur als auch auf dem Funktionserweiterungselement stattfinden.

In Figur 5 sind weitere geometrische Formen für Eingabeflächen dargestellt. Eine Eingabefläche kann beispielsweise als Kreis generiert werden, indem der Benutzer die Oberfläche des Roboterarms an zwei Punkten berührt. Ein Dreieck kann durch drei Berührungen definiert werden, währen ein Polygon durch mehr Berührungen definiert werden kann. Die Vervollständigung der gebildeten oder auch anderer geometrischer Figuren erfolgt durch eine Software automatisch.

## Patentansprüche

1. Verfahren zur Funktionsoptimierung eines Roboterarms (10), mit den Schritten:
Markieren eines Eingabepunktes oder einer Eingabefläche auf der Oberfläche des Roboterarms (10), bei dessen bzw. deren Drücken durch einen Bediener ein Erfassen einer Kraft und/oder eines Drehmoments in mindestens einem Gelenk erfolgt
sowie ein Ableiten der Position des Berührungspunktes auf der Oberfläche des Roboterarms (10),
sodass hierdurch ein Ableiten eines Befehls erfolgt, der durch das Drücken dieses Eingabepunktes und/oder der Eingabefläche ausgelöst werden soll,
**dadurch gekennzeichnet, dass**
basierend auf der bekannten Geometrie des Roboterarms (10) ein zweidimensionales Abbild (20) mindestens eines Teils der dreidimensionalen Oberfläche des Roboterarms (10) erstellt wird, wobei auf dieser zweidimensionalen Abbildung (20) mindestens ein Eingabepunkt und/oder mindestens eine Eingabefläche (22a-c) markiert ist, an dessen bzw. deren Stelle an der Oberfläche des ersten Roboterarms (10) das Eingeben eines Befehls erfolgen soll.

2. Verfahren zur Funktionsoptimierung eines Roboterarms nach Anspruch 1, **dadurch gekennzeichnet, dass** die zweidimensionale Abbildung (20) eines Teils der dreidimensionalen Oberfläche mindestens ein Gelenk des Roboterarms (10) enthält.

3. Verfahren zur Funktionsoptimierung eines Roboterarms nach Anspruch 1-2, **dadurch gekennzeichnet, dass** das Markieren des Eingabepunktes bzw. der Eingabefläche durch Aufbringen eines Aufklebers auf die Oberfläche des Roboterarms (10) erfolgt.

4. Verfahren zur Funktionsoptimierung eines Roboterarms nach Anspruch 1-3, **dadurch gekennzeichnet, dass** das Markieren des Eingabepunktes bzw. der Eingabefläche durch Aufbringen eines Leuchtelements insbesondere einer OLED-Folie auf die Oberfläche des Roboterarms (10) erfolgt.

5. Verfahren zur Funktionsoptimierung eines Roboterarms nach Anspruch 1-4, **dadurch gekennzeichnet, dass** dem Eingabepunkt (22a-c) seine Funktion, d.h. der Befehl, der durch sein Drücken erzeugt werden soll, wie folgt zugewiesen wird:
- Drücken des Eingabepunktes am Roboterarm (10)
- - Auswählen der gewünschten Funktion des Eingabepunktes
- Zuordnen dieser ausgewählten Funktion zum Eingabepunkt

6. Verfahren zur Funktionsoptimierung eines Roboterarms nach Anspruch 1-7, **dadurch gekennzeichnet, dass** der Eingabepunkt und/oder die Eingabefläche (22a-c) als analoger Knopf dient, indem die Größe der auf ihm bzw. ihr aufgebrachten Kraft bzw. des Drehmoments erfasst wird.

7. Verfahren zur Funktionsoptimierung eines Roboterarms nach Anspruch 1-6, **dadurch gekennzeichnet, dass** der Eingabefläche ihre Funktion, d.h. der Befehl, der durch ihr Drücken erzeugt werden soll, wie folgt zugewiesen wird:
- - Abfahren der Umrisse der Eingabefläche auf der Oberfläche des Roboterarms
- - Auswählen der gewünschten Funktion des Eingabepunktes
- Zuordnen dieser ausgewählten Funktion zum Eingabepunkt

8. Verfahren zur Funktionsoptimierung eines Roboterarms nach Anspruch 1-7, **dadurch gekennzeichnet, dass** bei Drücken eines Eingabepunktes bzw. einer Eingabefläche (22a-c) der Roboterarm an seinem distalen Ende anstelle eines Werkzeugs ein Funktionserweiterungselement aufnimmt, auf dem mehrere Eingabepunkte und/oder Eingabeflächen markiert sind, so dass der Funktionsumfang des Roboterarms (10) erweitert wird.

## Claims

1. Method for optimizing the functionality of a robot arm (10), comprising the steps of:
Marking an input point or an input surface on the surface of the robot arm (10), upon pressing of which by an operator a detection of force and/or torque in at least one joint occurs,
as well as deriving the position of the touch point on the surface of the robot arm (10),
resulting in deriving a command that is to be triggered by pressing this input point and/or the input surface,
**characterized in that**
based on the known geometry of the robot arm (10), a two-dimensional image (20) of at least part of the three-dimensional surface of the robot arm (10) is created, on which at least one input point and/or at least one input surface (22a-c) is marked, at whose position on the surface of the first robot arm (10) the input of a command is to occur.

2. Method for optimizing the functionality of a robot arm according to claim 1, **characterized in that** the two-dimensional image (20) of a part of the three-dimensional surface contains at least one joint of the robot arm (10).

3. Method for optimizing the functionality of a robot arm according to claims 1-2, **characterized in that** the marking of the input point or the input surface occurs by applying a sticker to the surface of the robot arm (10).

4. Method for optimizing the functionality of a robot arm according to claims 1-3, **characterized in that** the marking of the input point or the input surface occurs by applying a light element, particularly an OLED foil, to the surface of the robot arm (10).

5. Method for optimizing the functionality of a robot arm according to claims 1-4, **characterized in that** the input point (22a-c) is assigned its function, i.e., the command to be generated by its pressing, as follows:
• Pressing the input point on the robot arm (10)
• Selecting the desired function of the input point
• Assigning this selected function to the input point

6. Method for optimizing the functionality of a robot arm according to claims 1-7, **characterized in that** the input point and/or the input surface (22a-c) serves as an analog button by detecting the magnitude of the force and/or torque applied to it.

7. Method for optimizing the functionality of a robot arm according to claims 1-6, **characterized in that** the input surface is assigned its function, i.e., the command to be generated by its pressing, as follows:
• Tracing the outlines of the input surface on the surface of the robot arm
• Selecting the desired function of the input point
• Assigning this selected function to the input point

8. Method for optimizing the functionality of a robot arm according to claims 1-7, **characterized in that** pressing an input point or an input surface (22a-c) causes the robot arm to receive a functionality extension element at its distal end instead of a tool, on which multiple input points and/or input surfaces are marked, so that the functional scope of the robot arm (10) is expanded.

## Revendications

1. Procédé d'optimisation des fonctionnalités d'un bras robotisé (10), comprenant les étapes de :
Marquer un point d'entrée ou une surface d'entrée sur la surface du bras robotisé (10), où en appuyant par un opérateur une détection d'une force et/ou d'un couple dans au moins une articulation se produit
ainsi qu'une déduction de la position du point de contact sur la surface du bras robotisé (10),
de manière à ce que ceci entraîne une déduction d'une commande qui doit être déclenchée par la pression de ce point d'entrée et/ou de la surface d'entrée,
**caractérisé en ce que**,
basé sur la géométrie connue du bras robotisé (10), une image bidimensionnelle (20) d'au moins une partie de la surface tridimensionnelle du bras robotisé (10) soit créée, où sur cette image bidimensionnelle (20) au moins un point d'entrée et/ou au moins une surface d'entrée (22a-c) est marqué, à l'endroit duquel sur la surface du premier bras robotisé (10) l'introduction d'une commande doit avoir lieu.

2. Procédé d'optimisation des fonctionnalités d'un bras robotisé selon la revendication 1, **caractérisé en ce que** l'image bidimensionnelle (20) d'une partie de la surface tridimensionnelle contient au moins une articulation du bras robotisé (10).

3. Procédé d'optimisation des fonctionnalités d'un bras robotisé selon les revendications 1-2, **caractérisé en ce que** le marquage du point d'entrée ou de la surface d'entrée est effectué en appliquant un autocollant sur la surface du bras robotisé (10).

4. Procédé d'optimisation des fonctionnalités d'un bras robotisé selon les revendications 1-3, **caractérisé en ce que** le marquage du point d'entrée ou de la surface d'entrée est effectué en appliquant un élément lumineux et en particulier un film OLED sur la surface du bras robotisé (10).

5. Procédé d'optimisation des fonctionnalités d'un bras robotisé selon les revendications 1-4, **caractérisé en ce que** la fonction du point d'entrée (22a-c), c'est-à-dire la commande qui doit être générée par la pression sur celui-ci, est assignée de la manière suivante :
∘ Appuyer sur le point d'entrée sur le bras robotisé (10)
∘ Sélectionner la fonction souhaitée du point d'entrée
∘ Assigner cette fonction sélectionnée au point d'entrée

6. Procédé d'optimisation des fonctionnalités d'un bras robotisé selon les revendications 1-7, **caractérisé en ce que** le point d'entrée et/ou la surface d'entrée (22a-c) servent de bouton analogique en détectant la quantité de force ou le couple appliqué sur celui-ci.

7. Procédé d'optimisation des fonctionnalités d'un bras robotisé selon les revendications 1-6, **caractérisé en ce que** la fonction de la surface d'entrée, c'est-à-dire la commande qui doit être générée par la pression sur celle-ci, est assignée de la manière suivante :
∘ Déplacer le contour de la surface d'entrée sur la surface du bras robotisé
∘ Sélectionner la fonction souhaitée du point d'entrée
∘ Assigner cette fonction sélectionnée au point d'entrée

8. Procédé d'optimisation des fonctionnalités d'un bras robotisé selon les revendications 1-7, **caractérisé en ce que**, en appuyant sur un point d'entrée ou une surface d'entrée (22a-c), le bras robotisé prend à son extrémité distale, à la place d'un outil, un élément d'extension fonctionnelle, où plusieurs points d'entrée et/ou surfaces d'entrée sont marqués, afin d'étendre la gamme de fonctionnalités du bras robotisé (10).
